(19) Europäisches Patentamt
European Patent Office
Office européen des brevets

(11) Publication number: **0 086 826 B1**

(12) **EUROPEAN PATENT SPECIFICATION**

(45) Date of publication of patent specification: **22.01.86**

(51) Int. Cl.[4]: **C 07 F 9/165,** A 01 N 57/12

(21) Application number: **82902845.5**

(22) Date of filing: **13.08.82**

(86) International application number: **PCT/US82/01102**

(87) International publication number: **WO 83/00870 17.03.83 Gazette 83/07**

(54) **ALPHA-BRANCHED ALKYLTHIOPHOSPHATE PESTICIDES.**

(30) Priority: **28.08.81 US 297437**

(43) Date of publication of application: **31.08.83 Bulletin 83/35**

(45) Publication of the grant of the patent: **22.01.86 Bulletin 86/04**

(84) Designated Contracting States: **AT BE CH DE FR GB LI NL**

(56) References cited:
**EP-A-0 018 224**
**DE-A-2 232 075**
**GB-A-1 081 270**
**JP-B-44 029 847**
**US-A-4 273 769**
**US-A-4 383 991**

**The file contains technical information submitted after the application was filed and not included in this specification**

(73) Proprietor: **FMC Corporation**
**2000 Market Street**
**Philadelphia Pennsylvania 19103 (US)**

(72) Inventor: **FAHMY, Mohamed Abdel Hamid**
**23 Shady Brook Lane**
**Princeton, NJ 08540 (US)**

(74) Representative: **Mongrédien, André et al**
**c/o SOCIETE DE PROTECTION DES INVENTIONS**
**25, rue de Ponthieu**
**F-75008 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 086 826 B1

**Description**

The present invention relates to pesticides, more particularly pesticides for control of nematodes, insects and mites. The compounds of this invention are O-alkyl, S,S-dialkyl phosphorodithioates in which one or both of the S-alkyl groups is an α-branched alkyl group. The compounds of this invention exhibit high levels of insecticidal and nematicidal activity, low phytotoxicity and excellent residual activity when soil incorporated.

EP—A—18 224 discloses alkyl phosphorodithioates of the formula:

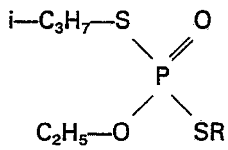

in which R is methyl or ethyl group. These compounds are used as nematocides.

GB—A—1 081 270 discloses dithiol-phosphoric acid esters of the formula:

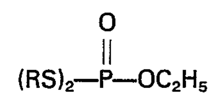

wherein R is an n-propyl or isopropyl radical. These compounds are used as nematocides.

U.S. patent 3,112,244 discloses phosphorodithioates of the formula:

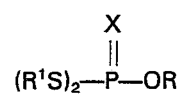

in which X is oxygen or sulfur and each R is a lower alkyl group, but does not disclose compounds in which $R^1$ is α-branched or in which the two $R^1$ groups differ from each other. The compounds of this patent are used as soil insecticides and for control of nematodes, but have high phytotoxicity and low residual activity when soil incorporated.

The control of nematodes and soil borne insects requires a compound which retains its activity throughout the growing season and has minimal phytotoxic or other plant inhibitory effects. The present invention provides α-branched compounds of formula I having substantially improved residual activity without any substantial phytotoxic effect at normal use levels.

As used in this application the term "α-branched" means that in the substituent R and optionally in the substituent $R^1$, branching occurs on the carbon atoms attached to sulfur.

The present invention provides O-alkyl S,S-dialkyl phosphorodithioate compounds of the formula:

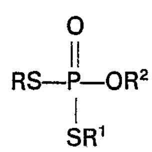

I

in which
— R is s-butyl and $R^1$ is n-propyl, or s-butyl; or
— R is t-butyl and $R^1$ is s-butyl; and
— $R^2$ is ethyl.

The following compounds of formula I are illustrative of the scope of this invention:

| Cmpd | R | $R^1$ | $R^2$ |
|---|---|---|---|
| 1 | *s*-butyl | propyl | ethyl |
| 2 | *t*-butyl | *s*-butyl | ethyl |
| 3 | *s*-butyl | *s*-butyl | ethyl |

The compounds of this invention are prepared by reacting an S-alkyl phosphorothioic dichloride (II) with an alkanol to produce an O-alkyl S-alkyl phosphorothioic chloride (III) in accordance with the general reaction:

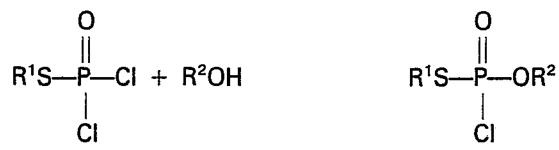

II III

that reaction and starting material being analogous to those disclosed in U.S. Patent 4,056,581, then reacting Compound III with an alkali, or alkaline earth salt of an alkane thiol to produce that compound of this invention, in accordance with the general reaction

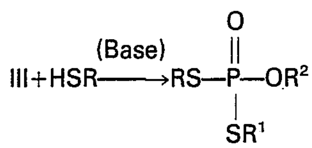


In the foregoing reactions the order of addition is critical when R is t-butyl; $R^1$ must be added first to the molecule if R is a t-butyl.

The compounds of this invention in which R and $R^1$ are the same may suitably be prepared by reacting together 2 molar equivalents of an alkali or alkaline earth salt of an alkane thiol and one molar equivalent of an O-alkyl phosphoric dichloride.

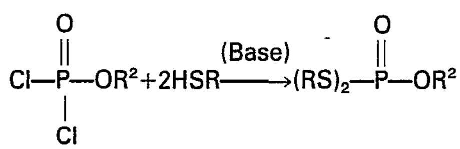


Another method for preparing the compounds of this invention is by reacting an alkanesulfenyl chloride with a dialkyl chlorophosphite to produce III (K. A. Petrov et al., Zh. Obsheh. Khim. *26*, 3381—4 1956), then reacting that with an alkane thiol as shown above.

The following examples illustrate the methods for preparation of the compounds of the invention.

Example. 1

Synthesis of O-ethyl S-*s*-butyl S-*t*-butyl phosphorodithioate

To a solution of 90.2 g (1.0 mole) of 1-methyl-1-propanethiol in 300 ml of toluene, maintained between −3°C and 7°C, 148 g (1.1 mole) of sulfuryl chloride was added dropwise during a one hour period. To this mixture at −3°C was added 60 g (1.0 mole) glacial acetic acid in one portion. The dropwise addition of 137.3 g (1.0 mole) of phosphorous trichloride at −3 to 6°C followed during a one hour period. The reaction mixture was then stirred at room temperature for approximately sixteen hours. After adding 3 ml of sulfuryl chloride the solvent was removed using a rotary evaporator under vacuum. The brown oil that remained was vacuum distilled, yielding 168.9 g of S-*s*-butyl phosphorothioic dichloride, b.p. 75°C/2.4 mbar (1.8 mm of Hg).

To a solution of 20.7 g (0.10 mole) of S-*s*-butyl phosphorothioic dichloride in 100 ml of toluene cooled with an iced salt water bath was added dropwise 6.9 g (0.15 mole) of ethanol followed by 7.9 g (0.10 mole) of pyridine. This mixture was stirred at room temperature for one hour. The pyridine hydrochloride was filtered off and the solvent removed using a rotary evaporator under vacuum. The colorless oil that remained was vacuum distilled, yielding 16.75 g of O-ethyl S-*s*-butyl phosphorothioic chloride, b.p. 68—76°C/0.66 mbar (0.5 mm Hg).

To a suspension of 1.2 g (0.05 mole) of sodium hydride in 50 ml of dry tetrahydrofuran was added 4.5 g (0.05 mole) of 2-methyl-2-propanethiol dropwise under a nitrogen atmosphere. This mixture was stirred for approximately 64 hours. In a dropwise manner 10.8 g (0.05 mole) of O-ethyl S-*s*-butyl phosphorothioic chloride was added to the reaction mixture. Stirring was continued for approximately 24 hours. The solvent was removed using a rotary evaporator under vacuum. Toluene (100 ml) and ethanol (5 ml) were added to the residue. This solution was washed three times with 50 ml portions of water, dried over anhydrous sodium sulfate, filtered, and stripped of solvent, leaving a yellow oil as the residue. The yellow oil was distilled under vacuum, yielding 8.75 g of O-ethyl S-*s*-butyl S-*t*-butyl phosphorodithioate, b.p. 87—89°C/0.027 mbar (0.02 mm of Hg). The proton and $^{31}P$ nmr spectra of this product were consistent with the assigned structure.

The compounds of this invention, in addition to controlling nematodes, control soil borne insects such as corn rootworm, and also insects which feed on the above ground portions of the plant, including aphids and mites. For nematode and corn rootworm control the compound is advantageously applied to or incorporated into the soil in which crops are planted or are to be planted, or to the plant's roots. The

compound so applied will be taken up in the roots and translocated to the above ground portions of the plant where it will exert its insecticidal and miticidal activity on leaf feeding pests. If it is desired to control only pests attacking the above ground portions of the plant the compound may suitably be applied to the above-ground portion of the plant.

The compounds are generally not applied full strength but are typically applied as formulations which may be applied as such or further diluted for application. Typical formulations include compositions of the active ingredient in combination with one or more agriculturally acceptable adjuvants, carriers or extenders, preferably with a surface active agent, and optionally with other active ingredients. Suitable formulations include granules, powders, or liquids, the choice varying with the type of pest and environmental factors present at the particular locus of infestation. Thus, the compounds may be formulated as granules of various sizes, as dusts, as wettable powders, as emulsifiable concentrates, as solutions, as dispersions, as controlled release compositions, and the like. A typical formulation may vary widely in concentration of active ingredient depending upon the particular agent used, the additives and carriers used, other active ingredients, and the desired mode of application.

With due consideration to these factors the active ingredient of a typical formulation may, for example, be suitably present at a concentration of about 0.01% up to about 95%, preferably 0.1% up to 90%, of the formulation, agriculturally acceptable carriers, diluents, adjuvants, and other suitable active ingredients comprising the balance of the formulation. Compatible surface active agents, if employed in a formulation, may be present at various concentrations, suitably in the range of 1 to 30% by weight of the formulation.

The formulation may be used as such or diluted to a desired use dilution with a diluent or carrier suitable for facilitating dispersion of the active ingredients. A suitable concentration of the active ingredients in the use dilution may be in the range of 0.005% to 10%, more preferably 0.01% to about 10%, by weight.

Many variations of spraying, dusting, and controlled or slow release compositions of a type known in the art may be used by substituting or adding an insecticidal compound or compounds of this invention into the compositions known or apparent to the art.

The insecticidal compounds of this invention may be formulated and applied with other compatible active agents including nematicides, insecticides, acaracides, fungicides, plant regulators, herbicides, fertilizers, and the like.

In applying these compounds, whether alone or with other agricultural chemicals, an effective insecticidal amount of the active ingredient must be applied. While the application rate will vary widely depending on the choice of compound, formulation, mode of application, plant species being protected, planting density, and other like factors, a suitable use rate for agricultural crops may be in the range of 0.005 to 3 kg/ha, preferably 0.01 to about 1 kg/ha.

The compounds of this invention were tested for insecticidal activity as described below.

Topical application test

The test compound was dissolved in acetone and the resulting solution diluted with water to provide a test solution containing from 200 to 5000 nanograms/microliter. A 1 microliter droplet was applied to the second or third dorsal thoracic segment of each test larva. The insect was observed 24 hours later for toxic effect elicited by the test compound. An insect was considered dead if it could no longer right itself and move in an oriented pattern. The percent mortality for the test compounds is reported in Table 1 against Mexican bean beetle, Milkweed bug, Southern armyworm, and Southern Corn Rootworm.

Foliar application tests

The test compound was dissolved in 5—10 ml of acetone containing 0.25% octylphenoxypolyethoxyethanol. This solution was dispersed in a solution of 90% water, 9.75% acetone, and 0.25% octylphenoxypolyethoxyethanol to give a solution having 1250 ppm (w/w) active ingredient. In some instances aliquots of this solution were diluted with an appropriate amount of water to provide solutions containing various concentrations of active ingredient. Test organisms and techniques were as follows: The activity against the pea aphid (*Acyrthosiphon pisum* [Harris]) was evaluated on broad bean plants whose leaves were sprayed before infestation with adult aphids. The activity against two-spotted spider mite (*Tetranychus urticae* [Koch]) was evaluated on pinto bean plants the leaves of which were dipped or sprayed with test solution after infestation with adult mites. To prevent escape of the insects from the test site, the complete test plant or the incised leaves were placed in capped paper cups. The tests were transferred to a holding room at 80°C and 50% relative humidity for an exposure period of at least 48 hours. At the end of this time the dead and living insects were counted and the percent kill was calculated. Results of these tests are summarized in Table II below.

Soil incorporation tests for residual southern corn rootworm control

A solution of the test compound, containing 335 ppm test compound in 100 ml of a solution containing 90% water, 9.75% acetone and 0.25% octylphenoxypolyethoxyethanol, was stirred into topsoil in an amount sufficient to provide the desired concentration. The container for the test sample was capped and stored for the desired storage period (14 to 72 days). At the end of the storage period each test sample was

infested with 10 larvae and a kernel of germinating corn as a food supply. The samples were then recapped and returned to storage for three days at which time the tests were read for percent mortality.

The soil samples varied from test to test. In some tests there was employed a "synthetic soil" containing 1 part topsoil, one and one-half parts sand; and one and one-half parts vermiculite. In other tests, various types of topsoil were employed. For purposes of the present tests no attempt was made to distinguish between soil types.

The residual activity of the compounds of this invention is reported in Table III. The compounds of the invention showed excellent residual activity against the Corn Rootworm.

Soil incorporation tests for nematode control and phytotoxicity

Each compound was tested for nematicidal activity as a formulated material. The formulation used was a standard 5 wt.% dust formulation made up as follows:

| | |
|---|---|
| Active ingredient (100% active basis) | 5 parts |
| Base | 95 parts |

96%—attaclay
2%—highly purified sodium lignosulfonate (100%)
2%—powdered sodium alkylnaphthalenesulfonate (75%)

The mixture was ground to a fine powder.

The formulation described above was tested for activity against root-knot nematode (*Meloidogyne incognita*) as follows:

Nematode Culture—Tomato seedlings with two large true leaves were transplanted into six inch clay pots containing steam-sterilized sandy soil. One week after transplanting, galled roots of nematode-infested tomato plants, with fully developed egg masses, were placed in three holes in the soil around the seedling roots. Holes were then closed with soil. The plants were allowed to grow until fully developed egg masses were formed (6 to 7 weeks after inoculation).

Inoculum preparation—Infected tomato roots, containing egg masses, were cleaned under running tap water, cut into short pieces and comminuted with water in an electrical blender for 30 seconds. The shredded roots were poured onto layers of washed sand in a fiberglass flat. The flat was covered with plastic sheeting and kept at greenhouse temperatures for 3 to 7 days to allow about 50% of the larvae to hatch.

Preparation of root-knot nematode infested soil—Samples of the infested soil prepared as described above were processed for nematodes by using the Caveness and Jensen centrifugal-sugar flotation extraction technique [Caveness, F. E. and Jensen, H. J., "Modification of the Centrifugal Flotation Technique for the Isolation and Concentration of Nematodes and their Eggs from Soil and Plant Tissue," Proc. Helm. Soc., Washington, *22*, 87—89 (1955).]

A 500 mesh sieve was used to collect the nematodes and eggs, and their number was estimated under a stereomicroscope. Enough sand containing eggs and larvae was mixed with additional steam-sterilized sandy soil so that there were 800 to 1000 root-knot nematode larvae and eggs per pot of soil (three inch diameter each, containing approximately 300 g soil). Depending on the total amounts of nematode infested soil needed, mixing was accomplished by use of a cement mixer for 5 minutes or the V-shaped rotary mixer for 60 seconds.

Soil so infected was used for soil incorporated nematicidal studies within two days of preparation. The formulated compounds to be tested for nematicidal activity were incorporated in the root-knot nematode infested potting soil to give soil treatment at several application rates in the range of 2.5 to 25 ppm (weight chemical/weight soil). Young tomato plants were planted in this soil in three inch pots. At the end of two weeks the roots of all plants were examined and rated in comparison to untreated checks.

Control treatments—The untreated check plants were treated in the same manner as those treated with the active ingredient.

The rating system and the results of the tests against Rootknot nematode are shown in Table IV. High levels of activity in the soil incorporated test were exhibited by most of the exemplified compounds; a low level of phytotoxicity was observed.

TABLE I
Topical application tests
Percent mortality

| Compound | Insects | | | |
|---|---|---|---|---|
| | MBB[a,c] | MWB[a,c] | SAW[a,c] | SCR[a,e] |
| 1 | 100 | 100 | 25 | 100 |
| 2 | 100 | 30 | 0 | 100 |

a. MBB=Mexican bean beetle (*Epilachna varivestis*)
MWB=Milkweed bug (*Oncopeltus fasciatus*)
SAW=Southern armyworm (*Spodoptera eridania*)
SCR=Southern corn rootworm (*Diabrotica undecempunctata howardi* Barber)
c. 2500 ng/insect unless otherwise specified
e. 500 ng/insect unless otherwise specified

TABLE II
Foliar application tests
Percent mortality

| Application concentration compound | Insects | |
|---|---|---|
| | PA[a] Foliar 1250 ppm | TSM[a] Foliar 1250 ppm |
| 1 | 100 | 80 |
| 2 | 100 | 100 |

a. PA=Pea aphid (*Acyrthosiphon pisum*)
TSM=Twospotted spider mite (*Tetranychus urticae*)

TABLE III
Southern corn rootworm tests[a]
Percent mortality

| Concentration | Residual soil | |
|---|---|---|
| | 14 days 10.00 ppm | 72 days 10.00 ppm |
| 1 | 90 | 90 |
| 2 | 100 | 100[c] |

a. *Diabrotica undecempunctata howardi* Barber
c. 5 ppm

TABLE IV
Rootknot nematode tests[a]

| Compound | Knot index[b] | | | | Plant injury rating[c] |
|---|---|---|---|---|---|
| | 25 ppm | 10 ppm | 5 ppm | 2.5 ppm | |
| 1 | 0 | 0 | 0.33 | 0 | 1 |
| 2 | 0 | 0 | 0.5 | 0.62 | 2 |

[a.] *Meloidogyne incognita*
[b.] Knot Index—4=no control
3=25% control
2=50% control
1=75% control
0.8=80% control
0.5=90% control
0.1—0.4=95—99% control
0=complete control
[c.] Plant Injury Rating—0=no injury
1=slight phytotoxicity
2=moderate phytotoxicity
3=severe phytotoxicity
4=plant not expected to survive

**Claims for the Contracting States: BE CH DE FR GB LI NL**

1. A compound of the formula:

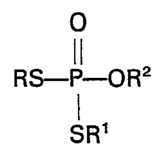

in which

— R is s-butyl and $R^1$ is n-propyl, or s-butyl; or
— R is t-butyl and $R^1$ is s-butyl; and
— $R^2$ is ethyl.

2. The compound of claim 1 in which R is s-butyl, and $R^1$ is s-butyl.
3. The compound of claim 1, in which R is t-butyl and $R^1$ is s-butyl.
4. An insecticidal and nematicidal composition comprising an insecticidal and nematicidal amount of the compound of claim 1, 2, or 3 in admixture with at least one agriculturally acceptable diluent, carrier, or adjuvant.
5. A method for controlling insects, nematodes, or both which comprises applying to the locus of infestation an insecticidal and nematicidal amount of the compound of claim 1, 2, or 3.
6. A method for manufacturing a compound of the formula:

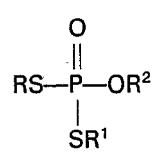

which comprises reacting a compound of the formula

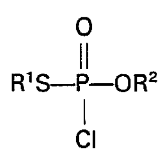

with an alkali or alkaline earth salt of an alkane thiol of the formula HSR, in which

— R is s-butyl and $R^1$ is n-propyl, or s-butyl, or
— R is t-butyl and $R^1$ is s-butyl; and
— $R^2$ is ethyl.

**Claims for the Contracting State: AT**

1. A method for manufacturing a compound of the formula:

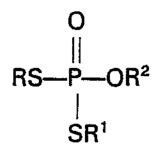

which comprises reacting a compound of the formula

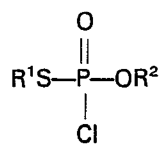

with an alkali or alkaline earth salt of an alkane thiol of the formula HSR, in which

— R is s-butyl and $R^1$ is n-propyl, or s-butyl, or
— R is t-butyl and $R^1$ is s-butyl; and
— $R^2$ is ethyl.

2. A method according to claim 1, in which R is s-butyl, and $R^1$ is s-butyl.
3. A method according to claim 1, in which R is t-butyl and $R^1$ is s-butyl.
4. An insecticidal and nematicidal composition comprising an insecticidal and nematicidal amount of a compound of the formula:

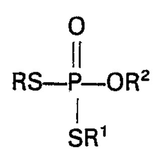

in which

— R is s-butyl and $R^1$ is n-propyl, or s-butyl; or
— R is t-butyl and $R^1$ is s-butyl; and
— $R^2$ is ethyl.

5. An insecticidal and nematicidal composition according to claim 4, in which R is s-butyl, and $R^1$ is s-butyl.
6. An insecticidal and nematicidal composition according to claim 4, in which R is t-butyl and $R^1$ is s-butyl.
7. A method for controlling insects, nematodes, or both which comprises applying to the locus of infestation an insecticidal and nematicidal amount of a compound of the formula:

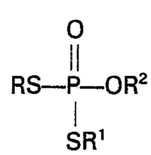

in which

— R is s-butyl and $R^1$ is n-propyl, or s-butyl; or
— R is t-butyl and $R^1$ is s-butyl; and
— $R^2$ is ethyl.

8. A method according to claim 7, in which R is s-butyl, and $R^1$ is s-butyl.
9. A method according to claim 7, in which R is t-butyl and $R^1$ is s-butyl.

**Revendications pour les états Contractants: BE CH DE FR GB LI NL**

1. Un composé de formule:

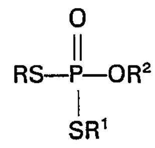

dans laquelle

— R est le s-butyle et $R^1$ est le n-propyle, ou le s-butyle; ou
— R est le t-butyle et $R^1$ est le s-butyle; et
— $R^2$ est l'éthyle.

2. Le composé de la revendication 1 dans lequel R est le s-butyle, et $R^1$ est le s-butyle.
3. Le composé de la revendication 1, dans lequel R est le t-butyle et $R^1$ est le s-butyle.
4. Une composition insecticide et nématicide comprenant une quantité insecticide et nématicide du composé de la revendication 1, 2 ou 3 en mélange avec au moins un diluant, support ou adjuvant acceptable en agriculture.
5. Procédé de lutte contre les insectes, les nématodes, ou les deux, qui comprend l'application sur le lieu de l'infestation d'une quantité insecticide et nématicide du composé de la revendication 1, 2 ou 3.
6. Procédé de fabrication d'un composé de formule

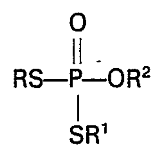

qui comprend la réaction d'un composé de formule:

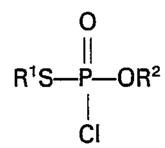

avec un sel alcalin ou alcalino-terreux d'un alcane thiol répondant à la formule HSR, dans lequel

— R est le s-butyle et $R^1$ est le n-propyle, ou le s-butyle, ou
— R est le t-butyle et $R^1$ est le s-butyle; et
— $R^2$ est l'éthyle.

**Revendications pour l'état Contractant: AT**

1. Procédé de fabrication d'un composé de formule:

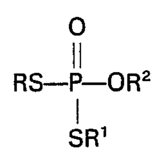

qui comprend la réaction d'un composé de formule:

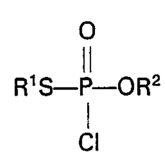

avec un sel alcalin ou alcalino-terreux d'un alcane thiol de formule HSR, dans lequel

— R est le s-butyle et $R^1$ est le n-propyle, ou le s-butyle, ou
— R est le t-butyle et $R^1$ est le s-butyle; et
— $R^2$ est l'éthyle.

2. Procédé selon la revendication 1, dans lequel R est le s-butyle, et $R^1$ est le s-butyle.
3. Procédé selon la revendication 1, dans lequel R est le t-butyle et $R^1$ est le s-butyle.
4. Une composition insecticide et nématicide comprenant une quantité insecticide et nématicide d'un composé de formule:

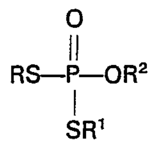

dans laquelle

— R est le s-butyle et $R^1$ est le n-propyle ou le s-butyle; ou
— R est le t-butyle et $R^1$ est le s-butyle; et
— $R^2$ est l'éthyle.

5. Une composition insecticide et nématicide selon la revendication 4, dans laquelle R est le s-butyle, et $R^1$ est le s-butyle.
6. Une composition insecticide et nématicide selon la revendication 4, dans laquelle R est le t-butyle et $R^1$ est le s-butyle.
7. Procédé de lutte contre les insectes, les nématodes ou les deux, qui comprend l'application sur le lieu de l'infestation d'une quantité insecticide et nématicide d'un composé de formule:

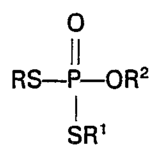

dans laquelle

— R est le s-butyle et $R^1$ est le n-propyle ou le s-butyle; ou
— R est le t-butyle et $R^1$ est le s-butyle; et
— $R^2$ est l'éthyle.

8. Procédé selon la revendication 7, dans lequel R est le s-butyle, et $R^1$ est le s-butyle.
9. Procédé selon la revendication 7, dans lequel R est le t-butyle et $R^1$ est le s-butyle.

**Patentansprüche für die Vertragsstaaten: BE CH DE FR GB LI NL**

1. Eine Verbindung der Formel

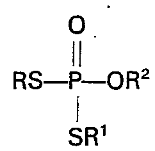

worin R sek.Butyl und $R^1$ n-Propyl oder sek.Butyl bedeuten oder R tert.Butyl nd $R^1$ sek.Butyl sind und $R^2$ Äthyl darstellt.
2. Die Verbindung gemäß Anspruch 1, worin R sek.Butyl und $R^1$ sek.Butyl bedeuten.
3. Die Verbindung gemäß Anspruch 1, worin R tert.Butyl und $R^1$ sek.Butyl bedeuten.
4. Insektizide und nematozide Zusammensetzung, die einen insektiziden und nematoziden Anteil der Verbindung gemäß Anspruch 1, 2 oder 3 in Mischung mit mindestens einem landwirtschaftlich annehmbaren Verdünnungsmittel, Träger oder Adjuvans aufweist.
5. Verfahren zum Bekämpfen von Insekten, Nematoden oder beiden, welches das Aufbringen eines insektiziden und nematoziden Anteils der Verbindung gemäß Anspruch 1, 2 oder 3 auf den Ort des Befalls umfaßt.
6. Verfahren zur Herstellung einer Verbindung der Formel

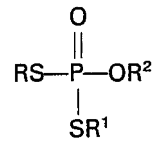

welches das Umsetzen einer Verbindung der Formel

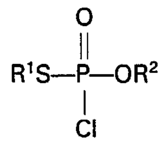

mit einem Alkali- oder Erdalkalisalz eines Alkanthiols der Formel HSR, worin R sek.Butyl und $R^1$ n-Propyl oder sek.Butyl bedeuten oder R tert.Butyl und $R^1$ sek.Butyl sind und $R^2$ Äthyl darstellt, umfaßt.

**Patentansprüche für den Vertragsstaat: AT**

1. Verfahren zur Herstellung einer Verbindung der Formel

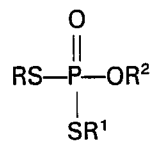

welches das Umsetzen einer Verbindung der Formel

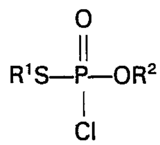

mit einem Alkali- oder Erdalkalisalz eines Alkanthiols der Formel HSR, worin R sek.Butyl und $R^1$ n-Propyl oder sek.Butyl bedeuten oder R tert.Butyl und $R^1$ sek.Butyl sind und $R^2$ Äthyl darstellt, umfaßt.

2. Verfahren gemäß Anspruch 1, worin R sek.Butyl und $R^1$ sek.Butyl bedeuten.

3. Verfahren gemäß Anspruch 1, worin R tert.Butyl und $R^1$ sek.Butyl bedeuten.

4. Insektizide und nematozide Zusammensetzung, die einen insektiziden und nematoziden Anteil einer Verbindung der Formel

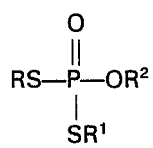

worin R sek.Butyl und $R^1$ n-Propyl oder sek.Butyl bedeuten oder R tert.Butyl und $R^1$ sek.Butyl sind und $R^2$ Äthyl darstellt, aufweist.

5. Insektizide und nematozide Zusammensetzung gemäß Anspruch 4, worin R sek.Butyl und $R^1$ sek.Butyl bedeuten.

6. Insektizide und nematozide Zusammensetzung gemäß Anspruch 4, worin R tert.Butyl und $R^1$ sek.Butyl bedeuten.

7. Verfahren zum Bekämpfen von Insekten, Nematoden oder beiden, welches das Aufbringen eines insektiziden und nematoziden Anteile einer Verbindung der Formel

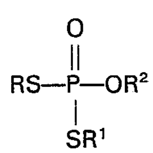

worin R sek.Butyl und $R^1$ n-Propyl oder sek.Butyl bedeuten oder R tert.Butyl und $R^1$ sek.Butyl sind und $R^2$ Äthyl darstellt, auf den Ort des Befalls umfaßt.

8. Verfahren gemäß Anspruch 7, worin R sek.Butyl und $R^1$ sek.Butyl bedeuten.

9. Verfahren gemäß Anspruch 7, worin R tert.Butyl und $R^1$ sek.Butyl bedeuten.